# EUROPEAN PATENT APPLICATION

(11) **EP 2 690 757 A2**
(43) Date of publication of application: **29.01.2014**
(21) Application number: 13177573.6
(22) Date of filing: 23.07.2013
(51) Int. Cl.: H02K 5/22

(54) **Electricity collection and distribution ring and electric motor**

(30) Priority: 23.07.2012 JP 2012163034
(71) Applicant: HITACHI METALS, LTD., Minato-ku, Tokyo 105-8614 (JP)
(72) Inventor: Tomita, Kazuhiko, Tokyo 105-8614 (JP); Egami, Kenichi, Tokyo 105-8614 (JP)
(74) Representative: Betten & Resch

(57) **Abstract**

An electricity collection and distribution ring includes a plurality of bus rings for collecting and distributing respective phase currents to multiple-phase windings wound around a plurality of circularly-arranged teeth. The plural bus rings each include a plurality of terminal parts and a main body part electrically conducted to the plural terminal parts. One bus ring having the largest number of terminal parts among the plural bus rings includes the main body part and the terminal parts that are integrally formed with a plate-shaped metal member being bent. Other bus rings of the plural bus rings excluding the one bus ring are configured such that the main body part includes an annular insulated wire including a conductor and an insulation covering the conductor, and the terminal parts are connected to the main body part at a plurality of positions where the conductor is exposed with the insulation removed.

## Description

The present application is based on Japanese Patent Application No.2012-163034 filed on July 23, 2012, the entire contents of which are incorporated herein by reference.

### BACKGROUND OF THE INVENTION

### 1. FIELD OF THE INVENTION

The invention relates to an electricity collection and distribution ring and an electric motor using the electricity collection and distribution ring.

### 2. DESCRIPTION OF THE RELATED ART

An electricity collection and distribution ring is known that collects and distributes motor current from and to windings of a stator in, e.g., a three-phase AC motor (see, e.g., JP-A-2010-63273).

The stator disclosed in JP-A-2010-63273 has an annularly-formed insulating holder having electrical insulation properties, plural bus bars (four phases: U-, V-, W- and neutral phases) held by the insulating holder, and plural coils wound around plural bobbins. On the insulating holder, three annular projections are formed so as to be interposed between the radially adjacent bus bars. The projections may increase a creepage distance between the bus bars and improve insulation reliability.

### SUMMARY OF THE INVENTION

In order to enhance the insulation reliability, it is necessary to ensure not only a creepage distance between the bus bars but also a spatial distance therebetween. For the stator disclosed in JP-A-2010-63273, it is desirable that a top portion of the projection protrude beyond a widthwise edge of the bus bar in order to ensure the spatial distance between the bus bars. However, forming the projection as such causes a problem that an axial dimension of the insulating holder increases, which increases the size of the stator.

Instead of using the plural bus bars, plural insulated wires each formed by covering a conductor with an insulation layer could be used to ensure insulation reliability such that end portions of coil windings and the conductors of the insulated wires are connected by plural terminals. However, man-hours for partially removing the insulation layers and for connecting the terminals increase in this case.

It is an object of the invention to provide an electricity collection and distribution ring that can ensure the insulation reliability while suppressing an increase in manufacturing man-hours and in size, as well as to provide an electric motor.
(1) According to one embodiment of the invention, an electricity collection and distribution ring comprises:
   a plurality of bus rings for collecting and distributing respective phase currents to multiple-phase windings wound around a plurality of circularly-arranged teeth,
   wherein the plurality of bus rings each comprise a plurality of terminal parts and a main body part electrically conducted to the plurality of terminal parts,
   wherein one bus ring having the largest number of terminal parts among the plurality of bus rings comprises the main body part and the terminal parts that are integrally formed with a plate-shaped metal member being bent, and
   wherein other bus rings of the plurality of bus rings excluding the one bus ring are configured such that the main body part comprises an annular insulated wire comprising a conductor and an insulation covering the conductor, and the terminal parts are connected to the main body part at a plurality of positions where the conductor is exposed with the insulation removed.

In the above embodiment (1) of the invention, the following modifications and changes can be made.
(i) The plurality of bus rings are concentrically arranged about an axis of the plurality of circularly-arranged teeth.
(ii) The one bus ring is arranged on the innermost or outermost side of the plurality of bus rings.
(iii) The terminal parts of the one bus ring protrude radially outward and the terminal parts of the other bus rings protrude radially inward, and
   wherein one-side end portions and other-side end portions of the multiple-phase windings are connected to the terminal parts at positions between the other bus rings and the one bus ring.
(iv) The terminal part of the one bus ring is arranged between the terminal parts of the other bus rings.
(v) The terminal parts of the other bus rings each comprises a first coupling portion extending along the main body part and a second coupling portion extending parallel to an axial direction from an end portion of the first coupling portion.
(vi) The plurality of teeth and the multiple-phase windings compose a stator of a three-phase AC motor to which U-, V- and W-phase currents are supplied,
   wherein the other bus rings comprise a first bus ring having the plurality of terminal parts connected to one-side end portions of a plurality of U-phase windings, a second bus ring having the plurality of terminal parts connected to one-side end portions of a plurality of V-phase windings and a third bus ring having the plurality of terminal parts connected to one-side end portions of a plurality of W-phase windings, and
   wherein the one bus ring comprises a neutral-phase bus ring connected to respective other-side end portions of the plurality ofU-, V- and W-phase windings.
(vii) The one-side end portions and the other-side end portions of the plurality of U-, V- and W-phase windings are connected to the terminal parts at positions between the first to third bus rings and the neutral-phase bus ring.
(viii) The electricity collection and distribution ring further comprises an annular holding member for holding the first to third bus rings and the neutral-phase bus ring,
   wherein the holding member comprises guide portions for guiding the one-side end portions and the other-side end portions of the plurality ofU-, V- and W-phase windings to between the first to third bus rings and the neutral-phase bus ring. **(2)** According to another embodiment of the invention, an electric motor comprises:
   the electricity collection and distribution ring according to the above embodiment **(1);**
   a stator comprising the plurality of teeth and the multiple-phase windings; and
   a rotor that is rotated with respect to the stator by a magnetic field of the multiple-phase winding.

### Points of the invention

According to one embodiment of the invention, an electricity collection and distribution ring is constructed such that the terminal parts of a fourth bus ring (=one bus ring for the neutral phase) are integrally formed with a plate-shaped metal member being bent. Thereby, the work of connecting the main body part to the terminal parts is eliminated. This allows man-hours for manufacturing the electricity collection and distribution ring to be reduced as compared to the case that the fourth bus ring is composed of, e.g., an annular wire and plural terminal parts connected thereto by clamping.

### BRIEF DESCRIPTION OF THE DRAWINGS

Next, the present invention will be explained in more detail in conjunction with appended drawings, wherein:
**FIG.1** is an explanatory diagram illustrating a structural example of an electricity collection and distribution ring in an embodiment of the present invention and an electric motor provided therewith;
**FIGS.2A** to **2C** show a holding member, wherein **FIG.2A** is a plan view, **FIG.2B** is a partial enlarged view of **FIG.2A** and **FIG.2C** is a cross sectional perspective view taken on line A-A of **FIG.2A****;**
**FIGS.3A** and **3B** show first to fourth bus rings, wherein **FIG.3A** is a plan view and **FIG.3B** is a cross sectional view showing the first to fourth bus rings which are housed in the holding member;
**FIG.4** is a perspective view showing a terminal and the periphery thereof;
**FIGS.5A** and **5B** show an arcuate conductor, wherein **FIG.5A** is a perspective view and **FIG.5B** is a plan view as viewed from an axial direction of the fourth bus ring; and
**FIGS.6A** to **6D** show a holding member and first to fourth bus rings in Comparative Example, wherein **FIG.6A** is a cross sectional view showing the holding member and the first to fourth bus rings, **FIG.6B** is a cross sectional view showing the first to fourth bus rings, **FIG.6C** is a cross sectional view showing the holding member and **FIG.6D** is a perspective view showing a terminal part of the second bus ring and the periphery thereof

### DETAILED DESCRIPTION OF THE PREFERRED EMBODIMENTS

### Embodiment

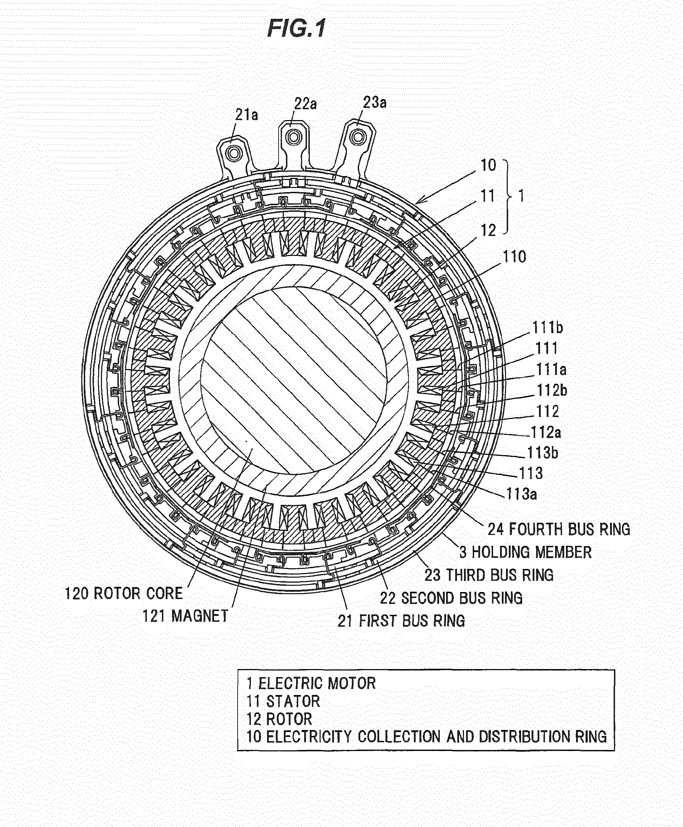

The embodiment of the invention will be described in reference to **FIGS.1** to **5****B.**

**FIG.1** is an explanatory diagram illustrating a structural example of an electricity collection and distribution ring in the embodiment of the invention and an electric motor provided therewith.

An electric motor **1** is a three-phase AC motor provided with a stator **11,** a rotor **12** and an electricity collection and distribution ring **10** for collecting and distributing motor current to the stator **11.** Note that, although the electricity collection and distribution ring **10** and the stator **11** in the electric motor **1** are aligned along a rotational axis of the rotor **12,** the stator **11** in **FIG.1** is shown inside the electricity collection and distribution ring **10** as a matter of convenience.

Multiple phase windings **111, 112** and **113** each covered with an insulation of e.g., enamel are wound around plural teeth **110** formed of a magnetic material and circularly arranged about an axis O, thereby forming the stator **11.** The U-phase winding **111,** the V-phase winding **112** or the W-phase winding **113** is wound around each tooth **110.** U-phase, V-phase and W-phase currents are respectively supplied to the multiple phase windings **111, 112** and **113.** Here, the axis O is the center of the circularly-arranged plural teeth **110** and substantially coincides with the rotational axis of the rotor **12.**

The electricity collection and distribution ring **10** is provided with first to fourth bus rings **21** to **24** for collecting and distributing power to the windings **111, 112** and **113,** and an annular holding member **3** for holding the first to fourth bus rings **21** to **24.** Power supply terminals **21**a, **22**a and **23**a are respectively provided on the first to third bus rings **21** to **23** at a position in a circumferential direction thereof. The power supply terminals **21**a, **22**a and **23**a protrude radially outward of the first to third bus rings **21** to **23** and are connected to a non-illustrated inverter.

The first to third bus rings **21** to **23** distribute motor current output from the inverter to the U-, V- and W-phase windings **111, 112** and **113** of the electric motor **1.** The fourth bus ring **24** is a neutral-phase bus ring of the stator **11** and is connected to respective end portions of the windings **111, 112** and **113.**

A one-side end portion **111**a of the U-phase winding **111** is electrically connected to the first bus ring **21.** Another-side end portion **111**b of the U-phase winding **111** is electrically connected to the fourth bus ring **24.** Likewise, one-side end portions **112**a and **113**a of the V- and W-phase windings **112** and **113** are electrically connected to the second and third bus rings **22** and **23** and other-side end portions **112**b and **113**b of the windings **112** and **113** are electrically connected to the fourth bus ring **24.**

The rotor **12** has a rotor core **120** rotatably supported by a non-illustrated shaft bearing so as to be coaxial with the stator **11** and a magnet **121** having plural magnetic poles and fixed to an outer peripheral surface of the rotor core **120.**

Motor currents having sine waveforms **120** degrees out of phase with each other are supplied to the U-, V- and W-phase windings **111, 112** and **113** from the non-illustrated inverter and this creates a rotating magnetic field in the stator **11.** The magnet **121** receives a torque generated by an attractive force and a repulsive force caused by the rotating magnetic field and the rotor core **120** is rotated with respect to the stator **11** by the torque.

### Structure of holding member

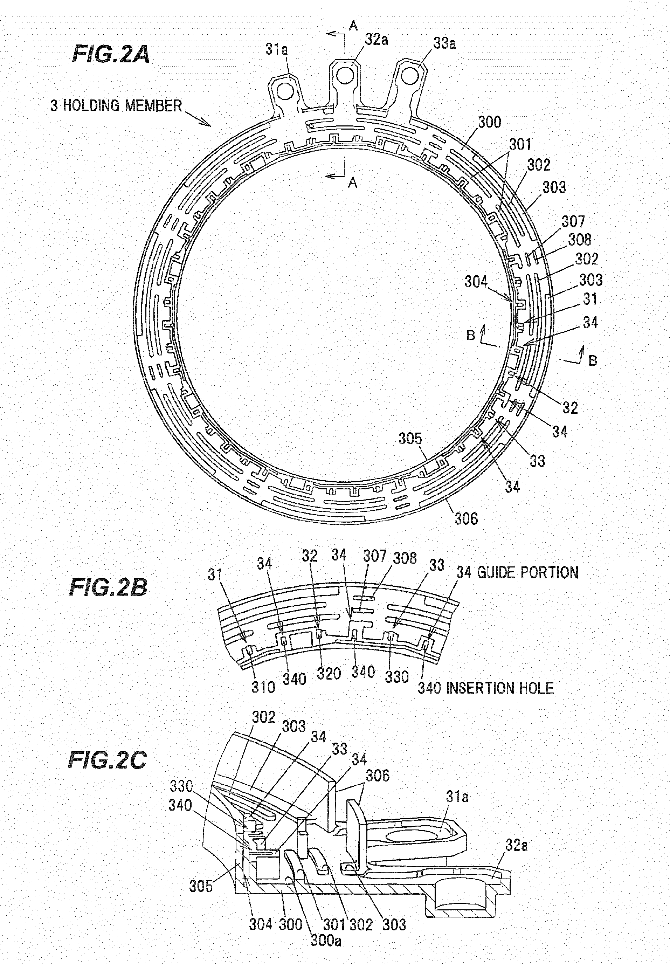

**FIGS.2A** to **2C** show the holding member **3,** wherein **FIG.2A** is a plan view, **FIG.2B** is a partial enlarged view of **FIG.2A** and **FIG.2C** is a cross sectional perspective view taken on line A-A of **FIG.2A****.**

The holding member **3** is made of, e.g., an injection-molded resin and is formed in a squared-C shape in cross section so as to have a housing space for housing the first to fourth bus rings **21** to **24.** The holding member **3** has plural first protrusions **301** which are formed on a bottom wall **300** so as to correspond to the first bus ring **21.** The plural first protrusions **301** each have an arc shape and are formed along the first bus ring **21.** In addition, the holding member **3** has plural second and third arc-shaped protrusions **302** and **303** which are formed on the bottom wall **300** so as to correspond to the second and third bus rings **22** and **23.**

The plural first to third protrusions **301** to **303** are concentrically formed such that the plural second protrusions **302** are located on the outer side of the plural first protrusions **301** and the plural third protrusions **303** are located on the outer side of the plural second protrusions **302.** In addition, the plural first to third protrusions **301** to **303** protrude from a bottom surface 300a of the holding member **3** on the bottom wall **300** to increase a creepage distance between the bottom surface **300**a and the first to third bus rings **21** to **23.**

In addition, plural holding grooves **304** which partially house the fourth bus ring **24** are formed on the holding member **3** to hold the fourth bus ring **24.** Each of the plural holding grooves **304** has an arc shape and is formed so as to be recessed in an axial direction of the holding member **3** toward the bottom surface **300**a. In the present embodiment, the plural holding grooves **304** are formed on the inner side of the plural first to third protrusions **301** to **303.**

The holding member **3** also has an inner wall **305** and an outer wall **306** which protrude in a direction orthogonal to the bottom surface **300**a (i.e., in the axial direction of the holding member **3)** respectively from inner and outer edges of the bottom wall **300.** The inner wall **305** serves as an inner peripheral surface of the holding grooves **304.** The outer wall **306** is formed continuously with the third protrusions **303.**

In addition, the holding member **3** has guide portions **31, 32, 33** and **34.** The guide portions **31, 32** and **33** guide the one-side end portions **111**a, **112**a and **113**a of the windings **111, 112** and **113** to connecting portions of terminals **211, 221** and **231** of the below-described first to third bus rings **21** to **23** and the guide portions **34** guide the other-side end portions **111**b, **112**b and **113**b of the windings **111, 112** and **113** to connecting portions of terminal parts **241, 242** and **243** of the below-described fourth bus ring **24.** In the present embodiment, the holding member **3** has guide portions **31, 32** and **33** of eight each and twenty-four guide portions **34.**

An insertion hole **310** for inserting the one-side end portion **111**a of the winding **111** is formed on the guide portion **31.** Likewise, insertion holes **320** and **330** for inserting the one-side end portions **112**a and **113**a of the windings **112** and **113** are respectively formed on the guide portions **32** and **33.** And likewise, an insertion hole **340** for inserting the other-side end portion **111**b, **112**b or **113**b of the winding **111, 112** or **113** is formed on the guide portion **34.** The detailed structure of the guide portions **31** to **34** will be described later.

The holding member **3** also has power supply terminal housing portions **31**a, **32**a and **33**a for housing the power supply terminals **21**a, **22**a and **23**a, plural partition walls **307** for separating the housing space of the first bus ring **21** from that of the second bus ring **22** and plural partition wall **308** for separating the housing space of the second bus ring **22** from that of the third bus ring **23.**

### Structure of First to fourth bus rings

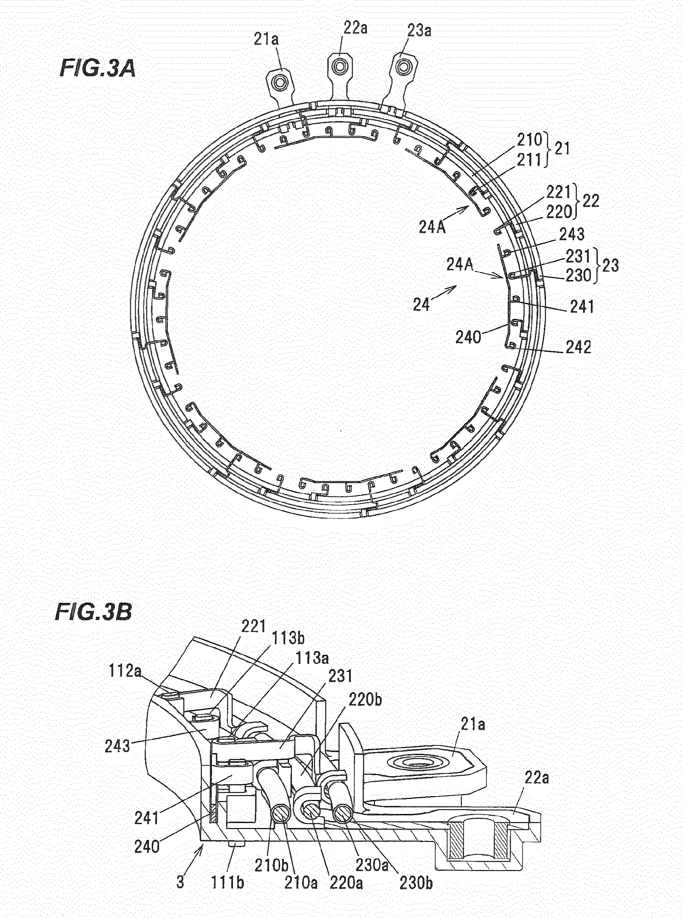

**FIGS.3A** and **3B** show the first to fourth bus rings **21** to **24,** wherein **FIG.3A** is a plan view and **FIG.3B** is a cross sectional view showing the first to fourth bus rings **21** to **24** housed in the holding member **3** which is also shown.

The first bus ring **21** has an annular electric wire **210** as a main body part, the terminals **211** as terminal parts connected to the electric wire **210** at plural circumferential positions and the power supply terminal **21**a. In the present embodiment, the first bus ring **21** has eight terminals **211** which are arranged at regular intervals. The one-side end portions **111**a of the windings **111** inserted through the insertion holes **310** of the guide portions **31** of the holding member **3** are respectively connected to the plural terminals **211.**

Both ends of the electric wire **210** are clamped and fixed to the power supply terminal **21**a. The electric wire **210,** which is a round wire having a circular cross section, is an annular insulated wire having a conductor **210**a formed of a metal having good conductivity such as copper and an insulation **210**b formed of an insulating resin covering the conductor **210**a. At the connecting portion between the terminal **211** and the electric wire **210,** one end of the terminal **211** is fixed by clamping to the conductor **210**a which is exposed by removing the insulation **210**b. Accordingly, the plural terminals **211** are electrically connected to the conductor **210**a of the electric wire **210.**

Likewise, the second bus ring **22** has an annular electric wire **220,** the terminals **221** arranged at plural circumferential positions on the electric wire **220** and the power supply terminal **22**a to which both ends of the electric wire **220** are clamped and fixed. In addition, the third bus ring **23** has an annular electric wire **230,** the terminals **231** arranged at plural circumferential positions on the electric wire **230** and the power supply terminal **23**a to which both ends of the electric wire **230** are clamped and fixed.

The electric wires **220** and **230** as main bodies are annular insulated wires respectively having conductors **220**a and **230**a and insulations **220**b and **230**b formed of an insulating resin covering the conductors **220**a and **230**b, and the terminals **221** and **231** as terminal parts are fixed by clamping to the conductors **220**a and **₂₃₀**a which are exposed by removing the insulations **220**b and **230**b.

The one-side end portions **112**a of the windings **112** inserted through the insertion holes **320** of the guide portions **32** of the holding member **3** are respectively connected to the plural terminals **221** of the second bus ring **22.** In addition, the one-side end portions **113**a of the windings **113** inserted through the insertion holes **330** of the guide portions **33** of the holding member **3** are respectively connected to the plural terminals **231** of the third bus ring **23.**

The one-side end portions **111**a, **112**a and **113**a of the windings **111, 112** and **113** inserted through the insertion holes **310, 320** and **330** of the guide portions **31, 32** and **33** of the holding member **3** are respectively connected to the plural terminals **211, 221** and **231.**

The fourth bus ring **24** is composed of plural arcuate conductors **24**A each having an arc shape and is formed in an annular shape as a whole by sequentially arranging the arcuate conductors **24**A at predetermined intervals along a circumferential direction of the holding member **3.**

The arcuate conductor **24**A has a main body part **240** bent into an arc shape and plural (three) terminal parts **241, 242** and **243** provided on the main body part **240** at plural (three) circumferential positions so as to protrude in a radial direction of the fourth bus ring **24.** In the present embodiment, the fourth bus ring **24** is composed of eight arcuate conductors **24**A and has twenty-four (**3** x **8**) terminal parts (terminal parts **241, 242** and **243)** in total at equal intervals. The main body part **240** and the terminal parts **241, 242** and **243** are integrally formed by bending a plate-shaped metal member and are electrically conducted to each other. The detailed structure of the arcuate conductor **24**A will be described later.

The first to fourth bus rings **21** to **24** are concentrically arranged about the axis O of the circularly-arranged plural teeth **110.** In other words, the first to fourth bus rings **21** to **24** are aligned in a direction orthogonal to the axis O. Furthermore, the first to fourth bus rings **21** to **24** are arranged to form the same plane. In the present embodiment, the fourth bus ring **24** is arranged at the innermost position and the third bus ring **23** is arranged at the outermost position. The first bus ring **21** is arranged on the outer side of the fourth bus ring **24** and the second bus ring **22** is arranged between the first bus ring **21** and the third bus ring **23.** In other words, the fourth bus ring **24** is arranged on the innermost side of the first to fourth bus rings **21** to **24.**

Among the first to fourth bus rings **21** to **24,** the fourth bus ring **24** has the largest number of the terminal parts (total of the terminal parts **241, 242** and **243)** while the number of the terminals **211** of the first bus ring **21,** the number of the terminals **221** of the second bus ring **22** and the number of the terminals **231** of the third bus ring **23** are all the same. The fourth bus ring **24** corresponds to "one bus ring" in the invention and the first to third bus rings **21** to **23** correspond to "other bus rings" in the invention.

The terminals **211, 221** and **231** of the first to third bus rings **21** to **23** protrude radially inward of the electric wires **210, 220** and **230** while the terminal parts **241, 242** and **243** of the fourth bus ring **24** protrude radially outward of the main body part **240.** The guide portions **31** to **34** are provided on the inner peripheral side of the electric wire **210** as well as on the outer peripheral side of the arcuate conductor **24**A of the fourth bus ring **24.**

That is, the one-side end portions **111**a, **112**a, **113**a and the other-side end portions **111**b, **112**b, **113**b of the windings **111, 112** and **113** are connected to the terminals **211, 221, 231** and the terminal parts **241, 242, 243** at positions between the first to third bus rings **21** to **23** and the fourth bus ring **24.** The guide portions **31** to **34** of the holding member **3** guide the one-side end portions **111**a, **112**a, **113**a and the other-side end portions **111**b, **112**b, **113**b of the windings **111, 112** and **113** to between the first to third bus rings **21** to **23** and the fourth bus ring **24.**

The terminal parts **241, 242** and **243** of the fourth bus ring **24** are arranged between the terminals **211, 221** and **231** of the first to third bus rings **21** to **23.** In more detail, as shown in **FIG.3A****,** the terminal part **241** of the fourth bus ring **24** is arranged between the terminal **211** of the first bus ring **21** and the terminal **231** of the third bus ring **23,** the terminal part **242** of the fourth bus ring **24** is arranged between the terminal **211** of the first bus ring **21** and the terminal **221** of the second bus ring **22** and the terminal part **243** of the fourth bus ring **24** is arranged between the terminal **221** of the second bus ring **22** and the terminal **231** of the third bus ring **23.**

Each of the terminals **211, 221** and **231** of the first to third bus rings **21** to **23** is formed in the same manner and the terminal **221** will be taken as an example to describe the detailed structure.

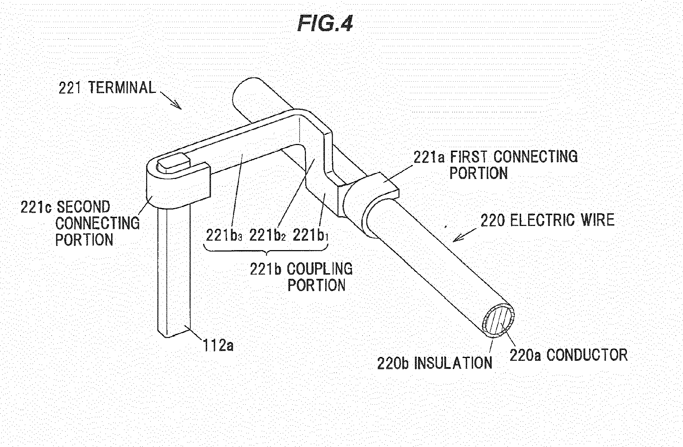

**FIG.4** is a perspective view showing the terminal **221** and the periphery thereof. The terminal **221** is formed by bending a plate-shaped conductor and integrally has a first connecting portion **221**a connected to the conductor **220**a of the electric wire **220,** a second connecting portion **221**c connected to the one-side end portion **112**a of the winding **112** and a coupling portion **221**b for coupling the first connecting portion **221**a to the second connecting portion **221**c.

The coupling portion **221**b is composed of a first coupling portion **221**b**₁** extending from the first connecting portion **221**a along the electric wire **220**, a second coupling portion **221**b**₂** extending from an end portion of the first coupling portion **221**b**₁** so as to be parallel to an axial direction of the second bus ring **22** and a third coupling portion **221**b**₃** inwardly extending in a radial direction of the second bus ring **22** from an end portion of the second coupling portion **221**b**₂**. The second connecting portion **221**c is provided continuously to the third coupling portion **221**b**₃** and is formed in a U-shape so as to surround the one-side end portion **112**a of the winding **112.**

The first connecting portion **221**a is clamped and fixed to the conductor **220**a of the electric wire **220** and the second connecting portion **221**c is fixed to the one-side end portions **112**a of the windings **112** by clamping, thereby electrically connecting the conductor **210**a to the winding **112** by the terminal **211.**

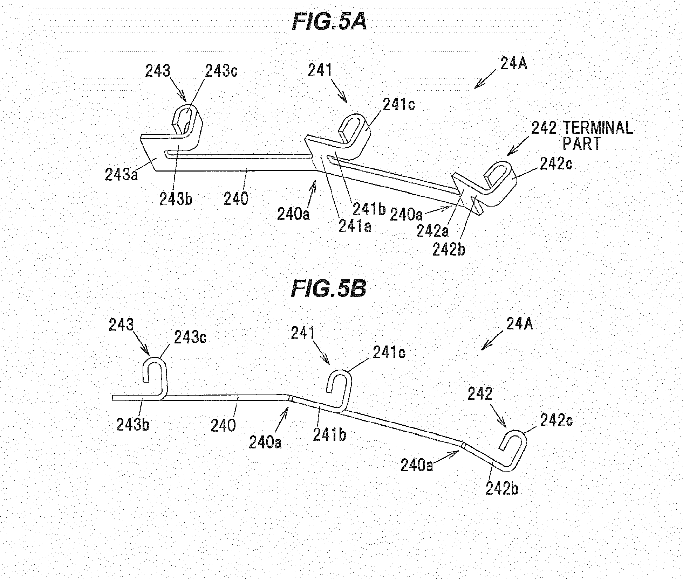

**FIGS.5A** and **5B** show the arcuate conductor **24A,** wherein **FIG.5A** is a perspective view and **FIG.5B** is a plan view as viewed from an axial direction of the fourth bus ring **24.** A metal plate formed of a metal having good conductivity such as copper is punched to obtain a plate-shaped conductor and the arcuate conductor **24**A is formed by bending the plate-shaped conductor.

The main body part **240** of the arcuate conductor **24**A is shaped into an arc shape by bending at two bent portions **240**a. On the main body part **240,** the terminal part **241** is provided in the circumferentially middle portion and the terminal parts **242** and **243** are provided at both end portions.

The terminal part **241** has a first coupling portion **241**a extending from the main body part **240** so as to be parallel to the axial direction of the fourth bus ring **24,** a second coupling portion **241**b extending from an end portion of the first coupling portion **241**a along the main body part **240** and a connecting portion **241**c formed in a U-shape so as to protrude radially outward of the fourth bus ring **24** from an end portion of the second coupling portion **241**b.

Likewise, the terminal parts **242** and **243** respectively have first coupling portions **242**a and **243**a extending from the main body part **240** so as to be parallel to the axial direction of the fourth bus ring **24,** second coupling portions **242**b and **243**b extending from end portions of the first coupling portions **242**a and **243**a along the main body part **240** and connecting portions **242**c and **243**c formed in a U-shape so as to protrude radially outward of the fourth bus ring **24** from end portions of the second coupling portions **242**b and **243**b.

The terminal parts **241, 242** and **243** are electrically connected to the other-side end portions **111**b, **112**b and **113**b of the windings **111, 112** and **113** by clamping the connecting portions **241**c, **242**c and **243**c thereto.

The main body part **240** is housed in the holding groove **304** (see **FIGS.2A** to **3B****)** and the arcuate conductor **24**A is thereby held by the holding member **3.** The terminal parts **241, 242** and **243** are located out of the holding groove **304** so that the connecting portions **241**c, **242**c and **243**c face the guide portions **34** in an extending direction of the insertion hole **340.** Predetermined gaps are formed between the connecting portions **241**c, **242**c, **243**c and the guide portions **34.**

In the electric motor **1** configured as described above, the power supply terminals **21**a, **22**a and **23**a are connected to the non-illustrated inverter and three-phase AC current output from the inverter is supplied to the one-side end portions **111**a, **112**a and **113**a of the windings **111, 112** and **113** via the terminals **211, 221** and **231** of the first to third bus rings **21** to **23.** The other-side end portions **111**b, **112**b, **113**b of the windings **111, 112** and **113** are connected to the fourth bus ring **24** as a neutral phase and the rotor **12** is rotated with respect to the stator **11** by a rotating magnetic field generated in the windings **111, 112** and **113** by the three-phase AC current.

### Comparative Example

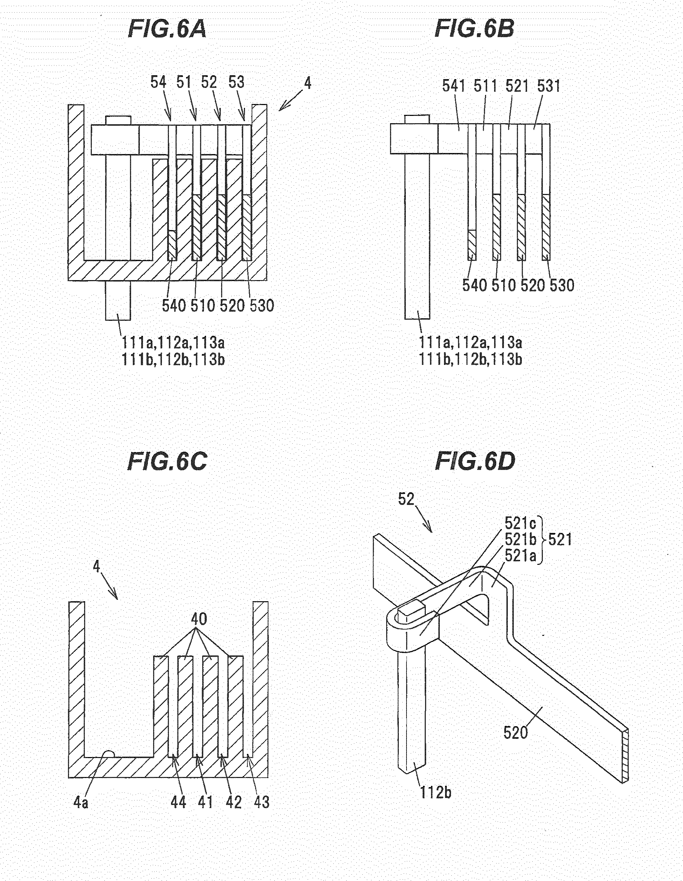

**FIGS.6A** to **6D** show a holding member **4** and first to fourth bus rings **51** to **54** held thereby in Comparative Example, wherein **FIG.6A** is a cross sectional view showing the holding member **4** and the first to fourth bus rings **51** to **54,** **FIG.6B** is a cross sectional view showing the first to fourth bus rings **51** to **54,** **FIG.6C** is a cross sectional view showing the holding member **4** and **FIG.6D** is a perspective view showing a terminal part **521** of the second bus ring **52** and the periphery thereof.

Each of the first to fourth bus rings **51** to **54** is a bus bar formed by bending a plate-shaped metal member. The first bus ring **51** integrally has a main body part **510** and a terminal part **511.** Likewise, the second and third bus rings **52** and **53** respectively integrally have main bodies **520, 530** and terminal parts **521, 531.** In addition, the fourth bus ring **54** integrally has a main body part **540** and a terminal part **541.**

Note that, although the terminal parts **511, 521, 531** and **541** of the first to fourth bus rings **51** to **54** are sequentially aligned in a circumferential direction of the holding member **4** at intervals, the terminal parts **511, 521, 531** and **541** are shown as being overlapped in **FIGS.6A** and **6B**. In addition, although the terminal parts **511, 521** and **531** of eight each are respectively provided on the first to third bus rings **51** to **53** and twenty-four terminal parts **541** are provided on the fourth bus ring **54,** **FIGS.6A** and **6B** show only one each of the terminal parts **511, 521, 531** and **541.**

The one-side end portions **111**a of the U-phase windings **111** (see **FIG.1****)** are connected to the plural terminal parts **511** of the first bus ring **51.** Likewise, the one-side end portions **112**a and **113**a of the V- and W-phase windings **112** and **113** are respectively connected to the plural terminal parts **521** and **531** of the second and third bus rings **52** and **53.** In addition, the other-side end portions **111**b, **112**b and **113**b of the U-, V- and W-phase windings **111, 112** and **113** are connected to the plural terminal parts **541** of the fourth bus ring **54.**

The main body part **540** of the fourth bus ring **54** is formed to have a smaller width than the main bodies **510, 520** and **530** of the first to third bus rings **51** to **53.** In the example shown in **FIGS.6A** to **6D****,** the width of the main body part **540** is about half of those of the main bodies **510, 520** and **530.** This is because, although all electric currents supplied to, e.g., the eight U-phase windings **111** flow through the first bus ring **51** and current-carrying capacity of the main body part **510** needs to be ensured so as to correspond thereto, it is enough for the main body part **540** to ensure the capacity corresponding to electric current flowing between the three terminal parts **541** arranged parallel in a circumferential direction. The width of the main body part **540** of the fourth bus ring **54** is the same as that of the main body part **240** of the arcuate conductor **24**A in the embodiment (see **FIG.3B****).**

The holding member **4** has a housing space **41** for housing the main body part **510** of the first bus ring **51,** a housing space **42** for housing the main body part **520** of the second bus ring **52,** a housing space **43** for housing the main body part **530** of the third bus ring **53** and a housing space **44** for housing the main body part **540** of the fourth bus ring **54.** The housing space **44** is formed on the innermost side of the holding member **4** and the housing space **43** is formed on the outermost side.

The housing spaces **41** to **44** are partitioned by plural annular partition walls **40.** The height of the partition wall **40** from a bottom surface **4**a of the holding member **4** is higher than the widths of the main bodies **510, 520, 530** and **540** of the first to fourth bus rings **51** to **54,** and accordingly, creepage and spatial distances between the first to fourth bus rings **51** to **54** are maintained to not less than a level which allows insulation reliability to be ensured.

As shown in **FIG.6D****,** the terminal part **521** of the second bus ring **52** has a first coupling portion **521**a extending in a width direction of the main body part **520,** a second coupling portion **521**b extending in a direction orthogonal to the main body part **520** and a connecting portion **521**c provided at a tip portion of the second coupling portion **521**b. The other-side end portion **112**b of the winding **112** is connected to the connecting portion **521**c by clamping. Note that, the terminal parts **511, 531** and **541** are also formed in the same manner as the terminal part **521** but length of a portion corresponding to the second coupling portion **521**b of the terminal part **521** is different from each other.

The radial width of the holding member **4** can be made smaller than that of the holding member **3** of the embodiment by arranging the first to fourth bus rings **51** to **54** so that the main bodies **510, 520, 530** and **540** are parallel to each other. However, in such a case, a height dimension of the partition wall **40** needs to be kept to not less than width dimensions of the main bodies **510, 520, 530** and **540** in order to ensure insulation reliability and an axial length is thus greater than the holding member **3.**

Since the electricity collection and distribution ring **10** and the stator **11** are aligned along the rotational axis of the rotor **12** as described above, making a radial dimension of the holding member **3** smaller than that of the teeth **110** does not contribute to downsizing of the electric motor **1.** The holding member **3** in the present embodiment has a shorter axial length than the holding member **4** in Comparative Example, which allows the electric motor **1** to be downsized by the difference of the length.

### Functions and effects of the embodiment

The following functions and effects are obtained in the embodiment.
(1) Since the terminal parts **241, 242** and **243** of the fourth bus ring **24** are integrally formed by bending a plate-shaped metal member, work of connecting the main body part **240** to the terminal parts **241, 242** and **243** is no longer needed. This allows man-hours for manufacturing the electricity collection and distribution ring **10** to be reduced as compared to the case where the fourth bus ring **24** is composed of, e.g., an annular wire and plural terminal parts connected thereto by clamping. Especially, since the fourth bus ring **24** has more terminal parts than the first to third bus rings **21** to **23,** forming the fourth bus ring **24** (the arcuate conductor **24**A) by bending a plate-shaped metal member allows the maximum effect of reducing the man-hours to be exerted.
**(2)** Since the fourth bus ring **24** is arranged on the innermost side of the first to fourth bus rings **21** to **24,** the terminals **211, 221** and **231** of the first to third bus rings **21** to **23** do not cross over the fourth bus ring **24.** In other words, the terminals **211, 221** and **231** protruding radially inward do not three-dimensionally intersect the fourth bus ring **24.** As a result, it is possible to sufficiently ensure the spatial and creepage distances between the terminals **211, 221, 231** and the fourth bus ring **24.** In addition, the electric wires **210, 220** and **230** which are respectively covered with the insulations **210**b, **220**b and **230**b allow a distance between the electric wires **210, 220** and the terminal **231** crossing over the wires **210, 220** and a distance between the electric wire **210** and the terminal **221** crossing over the wire **210** to be reduced. As a result, it is possible to reduce a thickness (a width in a direction along the axis O) of the electricity collection and distribution ring **10.**
(3) Since the terminal parts **241, 242** and **243** of the fourth bus ring **24** are arranged between the terminals **211, 221** and **231** of the first to third bus rings **21** to **23,** spaces in the radial direction of the electricity collection and distribution ring **10** for arranging the terminal parts **241, 242** and **243** and the terminals **211, 221** and **231** can be shared and it is thus possible to reduce a radial width of the electricity collection and distribution ring **10.** In addition, this allows a diameter of the electricity collection and distribution ring **10** to be reduced.

The coupling portion **221**b of the terminal **221** has the first coupling portion **221**b**₁**, the second coupling portion **221**b**₂** and the third coupling portion **221**b**₃** and is configured such that the third coupling portion **221**b**₃** crosses over the electric wire **210.** Since the first coupling portion **221**b**₁** extends along the electric wire **220** and the second coupling portion **221**b**₂** extends parallel to the axial direction from an end portion of the first coupling portion 221b**₁**, it is possible to reduce the thickness of the coupling portion **221**b (the thickness in the radial direction of the electricity collection and distribution ring **10**) at a portion interposed between the electric wire **210** and the electric wire **220.** This allows the radial width and the diameter of the electricity collection and distribution ring **10** to be reduced.
(5) Since the first to third bus rings **21** to **23** are insulated wires each formed by covering a conductor with an insulation, it is possible to easily ensure insulation reliability between the first to third bus rings **21** to **23** and between the fourth bus ring **24** and the first to third bus rings **21** to **23.** Since this allows insulation reliability to be ensured without providing, e.g., partition walls between the fourth bus ring **24** and the first to third bus rings **21** to **23** which increase a radial length of the holding member **3,** it is possible to downsize the electric motor **1** as compared to the case of using, e.g., the holding member **4** in Comparative Example.
**(6)** Since the one-side end portions **111**a, **112**a, **113**a and the other-side end portions **111**b, **112**b, **113**b of the windings **111, 112** and **113** are connected to the terminals **211, 221, 231** and the terminal parts **241, 242, 243** at positions between the first to third bus rings **21** to **23** and the fourth bus ring **24,** the terminals **211, 221** and **231** do not intersect the fourth bus ring **24.** In other words, since the terminals **211, 221** and **231** do not cross over the main body part **240** of the fourth bus ring **24** across the radial direction, it is possible to ensure the spatial distance between the terminals **211, 221, 231** and the main body part **240** of the fourth bus ring **24** without causing an increase in the size of the holding member **3.** As a result, it is possible to downsize the electricity collection and distribution ring **10** and the electric motor **1.**
(7) Since the one-side end portions **111**a, **112**a, **113**a and the other-side end portions **111**b, **112**b, **113**b of the windings **111, 112** and **113** are guided to the positions between the first to third bus rings **21** to **23** and the fourth bus ring **24** by the guide portions **31** to **34** of the holding member **3,** it is possible to easily assemble electricity collection and distribution ring **10** to the stator **11.**

Although the embodiment of the invention has been described, the invention according to claims is not to be limited to the above-mentioned embodiment. Further, please note that all combinations of the features described in the embodiment are not necessary to solve the problem of the invention.

In addition, the invention can be appropriately modified and implemented without departing from the gist thereof For example, although the fourth bus ring **24** composed of the plural arcuate conductors **24**A has been described in the embodiment, it is not limited thereto. The fourth bus ring **24** may be composed of one annular main body part and plural terminal parts provided thereon.

In addition, the case where the fourth bus ring **24** is arranged on the innermost side of the first to fourth bus rings **21** to **24** has been described in the embodiment, it is not limited thereto. The fourth bus ring **24** may be arranged on the outermost side of the first to fourth bus rings **21** to **24.** In this case, the terminals **211, 221** and **231** of the first to third bus rings **21** to **23** protrude radially outward of the electric wires **210, 220** and **230** and the terminal parts **241, 242** and **243** of the fourth bus ring **24** protrude radially inward of the main body part **240.** Then, the guide portions **31** to **34** are provided on the outer peripheral side of the electric wire **230** as well as on the inner peripheral side of the main body part **240** of the arcuate conductor **24**A.

## Claims

1. An electricity collection and distribution ring, comprising:
a plurality of bus rings for collecting and distributing respective phase currents to multiple-phase windings wound around a plurality of circularly-arranged teeth,
wherein the plurality of bus rings each comprise a plurality of terminal parts and a main body part electrically conducted to the plurality of terminal parts,
wherein one bus ring having the largest number of terminal parts among the plurality of bus rings comprises the main body part and the terminal parts that are integrally formed with a plate-shaped metal member being bent, and
wherein other bus rings of the plurality of bus rings excluding the one bus ring are configured such that the main body part comprises an annular insulated wire comprising a conductor and an insulation covering the conductor, and the terminal parts are connected to the main body part at a plurality of positions where the conductor is exposed with the insulation removed.

2. The electricity collection and distribution ring according to claim 1, wherein the plurality of bus rings are concentrically arranged about an axis of the plurality of circularly-arranged teeth.

3. The electricity collection and distribution ring according to claim 2, wherein the one bus ring is arranged on the innermost or outermost side of the plurality of bus rings.

4. The electricity collection and distribution ring according to claim 3, wherein the terminal parts of the one bus ring protrude radially outward and the terminal parts of the other bus rings protrude radially inward, and
wherein one-side end portions and other-side end portions of the multiple-phase windings are connected to the terminal parts at positions between the other bus rings and the one bus ring.

5. The electricity collection and distribution ring according to claim 4, wherein the terminal part of the one bus ring is arranged between the terminal parts of the other bus rings.

6. The electricity collection and distribution ring according to claim 2, wherein the terminal parts of the other bus rings each comprises a first coupling portion extending along the main body part and a second coupling portion extending parallel to an axial direction from an end portion of the first coupling portion.

7. The electricity collection and distribution ring according to any of claims 1 to 6, wherein the plurality of teeth and the multiple-phase windings compose a stator of a three-phase AC motor to which U-, V- and W-phase currents are supplied,
wherein the other bus rings comprise a first bus ring having the plurality of terminal parts connected to one-side end portions of a plurality of U-phase windings, a second bus ring having the plurality of terminal parts connected to one-side end portions of a plurality of V-phase windings and a third bus ring having the plurality of terminal parts connected to one-side end portions of a plurality of W-phase windings, and
wherein the one bus ring comprises a neutral-phase bus ring connected to respective other-side end portions of the plurality of U-, V- and W-phase windings.

8. The electricity collection and distribution ring according to claim 7, wherein the one-side end portions and the other-side end portions of the plurality of U-, V- and W-phase windings are connected to the terminal parts at positions between the first to third bus rings and the neutral-phase bus ring.

9. The electricity collection and distribution ring according to claim 8, further comprising an annular holding member for holding the first to third bus rings and the neutral-phase bus ring,
wherein the holding member comprises guide portions for guiding the one-side end portions and the other-side end portions of the plurality ofU-, V- and W-phase windings to between the first to third bus rings and the neutral-phase bus ring.

10. An electric motor, comprising:
the electricity collection and distribution ring according to any of claims 1 to 9;
a stator comprising the plurality of teeth and the multiple-phase windings; and
a rotor that is rotated with respect to the stator by a magnetic field of the multiple-phase winding.
